(19) Europäisches Patentamt / European Patent Office / Office européen des brevets

(11) **EP 4 438 243 A1**

(12) **EUROPEAN PATENT APPLICATION**

(43) Date of publication:
**02.10.2024 Bulletin 2024/40**

(21) Application number: **24163760.2**

(22) Date of filing: **15.03.2024**

(51) International Patent Classification (IPC):
**B25J 9/16** (2006.01)

(52) Cooperative Patent Classification (CPC):
**B25J 9/1674**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.03.2023 JP 2023052319**

(71) Applicant: **DENSO WAVE INCORPORATED**
**Chita-gun, Aichi-pref. 470-2297 (JP)**

(72) Inventor: **TAKAMURA, Noritaka**
**Chita-gun, Aichi-pref., 470-2297 (JP)**

(74) Representative: **Winter, Brandl - Partnerschaft mbB**
**Alois-Steinecker-Straße 22**
**85354 Freising (DE)**

(54) **ROBOT SYSTEM**

(57) A robot system includes an industrial robot (15). The industrial robot including an arm (31) including a plurality of joints and a plurality of drivers (45) that drive the plurality of respective joints. The robot system including a monitoring section (56), the monitoring section: determining an orientation of a distal end portion (28, 35) of the arm of the industrial robot; and monitoring whether the determined orientation of the distal end portion of the arm is within a set allowable range.

FIG.8

**Description**

BACKGROUND OF THE INVENTION

[Technical Field of the Invention]

The present disclosure relates to a robot system.

[Related Art]

Some robot control systems applied to industrial robots monitor, for example, a speed and a position of a driven robot (specifically, a distal end portion of an arm of the robot and shafts of joints of the arm). Some of such robot control systems have a function (so-called protective stop) to forcefully stop a robot in response to the robot performing an action which deviates from safety standards (see, for example, JPS6416395A and JPH0337701A).

SUMMARY

Here, there are various end effectors (for example, a hand, a cutting device, a polishing device, a laser device, and a sprayer) to be attached to a robot in accordance with work in which the robot is engaged. When some types of end effectors are attached, the safety of a robot may differ depending on an attitude (i.e., an orientation) of a distal end portion of an arm of the robot. For example, in a case where a polishing device is attached as an end effector, if a disc for polishing (in particular, a polishing surface) faces toward a work area for persons provided around the robot, a person is likely to accidentally touch a cutter or the like of the disc. It is difficult to overcome this even though the speed and position of the robot is monitored as in the above-described related arts.

As seen from the above, there is still room for improving a robot system in terms of a further improvement in the safety of a robot.

The present disclosure is made in view of the problem described above by way of example, or the like and a main object of the present disclosure is to contribute to an improvement in the safety of an industrial robot.

Description will be made below on a robot system for solving the above-described problem.

A robot system including an industrial robot (15), the industrial robot including an arm (31) including a plurality of joints and a plurality of drivers (45) that drive the plurality of respective joints, the robot system including a monitoring section (56), the monitoring section: determining an orientation of a distal end portion (28, 35) of the arm of the industrial robot; and monitoring whether the determined orientation of the distal end portion of the arm is within a set allowable range.

An industrial robot equipped with an arm including a plurality of joints each independently acting has high flexibility of motion. Thus, it is possible to cause the industrial robot to engage in a variety of types of work. Meanwhile, even though the distal end portion of the arm of the industrial robot is at the same position in different situations, the orientation of the distal end portion of the arm is not always the same in the different situations due to the high flexibility of motion. For example, even in a case where the distal end portion of the arm is to be moved to a specific position, different processes of movement may lead to different orientations of the distal end portion of the arm having reached the specific position. For example, in a case where a work area for persons is provided around the industrial robot, a worker is likely to touch the distal end portion of the arm if the distal end portion of the arm faces toward the work area. In addition, for example, a malfunction of an end effector, such as a laser device or a sprayer, included in the distal end portion of the arm under a situation where the distal end portion of the arm faces toward the work area would result in a problem such as output of a laser beam or the like toward the work area. Some controls systems for industrial robots have a function to monitor a position of the distal end portion of the arm and/or monitor a movement speed of the distal end portion of the arm. However, it may be difficult to prevent the occurrence of the above-described problem by the position monitoring and the speed monitoring. In this regard, in the robot system according to the embodiment of the present disclosure, the allowable range for the orientation of the distal end portion of the arm is set and it is monitored whether the orientation of the distal end portion of the arm is within the allowable range. This makes it possible to prevent the distal end portion of the arm from facing an unfavorable direction (for example, the above-described direction toward the work area, in particular, a worker, or the like) to reduce the occurrence of the above-described problem. This is preferable for further improving the safety of the industrial robot.

In addition, the distal end portion of the arm includes an attachment section (28) to which an end effector (35) is attached, an orientation of reference for the attachment section is set, and an upper limit of a deviation between the orientation of reference for the attachment section and an orientation of the attachment section is set, and the monitoring section determines the orientation of the attachment section and performs predetermined control processing in response to the deviation exceeding the upper limit.

The orientation of reference for the distal end portion of the arm differs depending on the work or motion of the industrial robot. Accordingly, the orientation of reference and the upper limit of the deviation of orientation are set as described above, which makes it possible to appropriately monitor the orientation of the distal end portion of the arm in accordance with the work or motion of the industrial robot.

In addition, an industrial robot is usually attachable with an end effector in a replaceable manner in order to engage in a variety of types of work. However, acquiring information regarding the orientation of the distal end portion of the arm on the basis of the end effector makes a configuration related to monitoring complicated and would become a factor that hampers the monitoring function. In this regard, the orientation of not the end effector but the attachment section for the end effector is monitored, which makes it possible to favorably eliminate a safety concern.

In addition, the distal end portion of the arm includes an end effector (35), the end effector being attached to a distal end of the arm, an orientation of reference for the end effector is set, and an upper limit of a deviation between the orientation of reference for the end effector and an orientation of the end effector is set, and the monitoring section determines the orientation of the end effector and performs predetermined control processing in response to the deviation exceeding the upper limit.

The orientation of reference for the distal end portion of the arm differs depending on the work or motion of the industrial robot. Accordingly, the orientation of reference and the upper limit of the deviation of orientation are set as described above, which makes it possible to appropriately monitor the orientation of the distal end portion of the arm in accordance with the work or motion of the industrial robot.

As described above, monitoring the attachment section for the end effector is preferable for reducing the possibility of the user accidentally touching the end effector. Here, in a case where the end effector has a specific component such as a working section such as a cutter or an outlet for a laser beam or the like, it is desirable that the specific component of the end effector do not face the work area or the like. In this regard, monitoring the orientation of the end effector as the distal end portion of the arm of the industrial robot as described above is effective in reducing the possibility of the worker touching the specific component of the above-described end effector.

It should be noted that the above-described predetermined control processing may include, for example, deceleration processing to decelerate the arm, stop processing to stop the arm, inversion processing to invert a motion of the arm, or alert processing to issue an alert regarding the orientation of the distal end portion of the arm.

In addition, the above-described or later-described orientation may refer to an orientation in a base coordinate system or a world coordinate system.

BRIEF DESCRIPTION OF THE DRAWINGS

In the accompanying drawings:

Fig. 1 is a perspective view of a robot according to a first embodiment.
Fig. 2 is a block diagram illustrating a configuration of the robot.
Fig. 3A is a schematic diagram illustrating an area of an installation area of the robot.
Fig. 3B is a schematic diagram illustrating a work routine of the robot.
Fig. 4A is a schematic diagram illustrating an example of an attitude of a distal end portion of an arm of the robot.
Fig. 4B is a schematic diagram illustrating another example of the attitude of the distal end portion of the arm of the robot.
Fig. 5 is a schematic diagram illustrating a configuration related to action monitoring.
Fig. 6A is a schematic diagram illustrating a monitoring item.
Fig. 6B is a schematic diagram illustrating a setting screen.
Fig. 6C is a schematic diagram illustrating a setting item related to monitoring of attitude.
Fig. 7A is a schematic diagram illustrating attitudes of a flange section and an end effector of the robot.
Fig. 7B is a detailed diagram illustrating the attitudes of the flange section and the end effector of the robot.
Fig. 8 is a flowchart illustrating attitude monitoring processing.
Fig. 9A is a schematic diagram illustrating a rotation of a vector.
Fig. 9B is a schematic diagram illustrating a rotation of a coordinate system.
Fig. 10A is a schematic diagram illustrating a setting item according to a second embodiment.
Fig. 10B is a schematic diagram illustrating a method of determination.
Fig. 11 is a hardware configuration diagram of a robot system.

DETAILED DESCRIPTION OF THE PREFERRED EMBODIMENTS

<First Embodiment>

Description will be made below on a first embodiment of the present disclosure with reference to the drawings.

A robot system 10 according to the present embodiment includes a vertical articulated industrial robot (hereinafter, referred to as a robot 15) that engages in work in cooperation with a person in a production line in a factory.

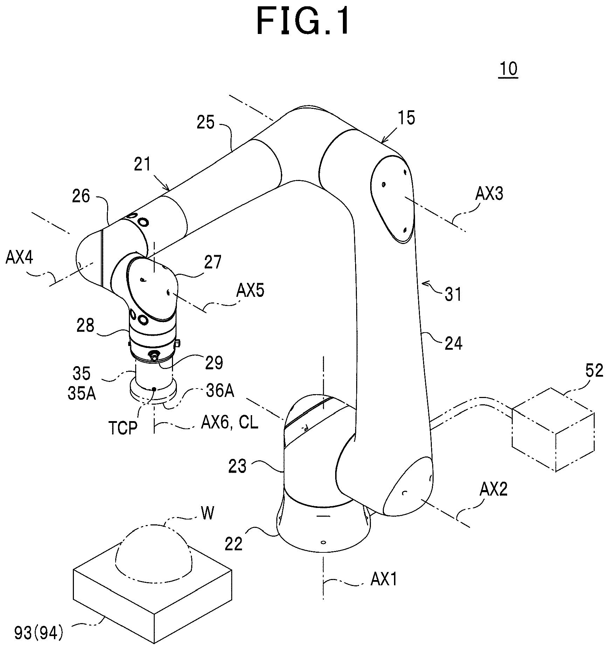

As illustrated in Fig. 1, a body (i.e., a robot body 21) of the robot 15 includes a base section 22, a shoulder section 23, a lower arm section 24, a first upper arm section 25, a second upper arm section 26, a wrist section 27, and a flange section 28. The base section 22 is fixed to a mount or the like. The shoulder section 23 is supported by the base section 22. The lower arm section 24 is supported by the shoulder section 23. The first upper arm section 25 is supported by the lower arm section 24. The second upper arm section 26 is supported by the first upper arm section 25. The wrist section 27 is supported by the second upper arm section 26. The flange section 28 is supported by the wrist section 27.

A first joint coupling the base section 22 and the shoulder section 23 is provided. The shoulder section 23 is rotatable in a horizontal direction around a coupling axis (i.e., a first axis AX1) of the first joint. In other words, the shoulder section 23 is rotatable around the first axis AX1 orthogonal to a horizontal plane. A second joint coupling the shoulder section 23 and the lower arm section 24 is provided. The lower arm section 24 is rotatable in an up-and-down direction around a coupling axis (i.e., a second axis AX2) of the second joint. In other words, the lower arm section 24 is rotatable around the second axis AX2 orthogonal to the first axis AX1. A third joint coupling the lower arm section 24 and the first upper arm section 25 is provided. The first upper arm section 25 is rotatable in the up-and-down direction around a coupling axis (i.e., a third axis AX3) of the third joint. In other words, the first upper arm section 25 is rotatable around the third axis AX3 parallel with the second axis AX2. A fourth joint coupling the first upper arm section 25 and the second upper arm section 26 is provided. The second upper arm section 26 is rotatable around a coupling axis (i.e., a fourth axis AX4 orthogonal to the third axis AX3) of the fourth joint. In other words, the second upper arm section 26 is rotatable around the fourth axis AX4 orthogonal to the third axis AX3. A fifth joint coupling the second upper arm section 26 and the wrist section 27 is provided. The wrist section 27 is rotatable in the up-and-down direction around a coupling axis (i.e., a fifth axis AX5) of the fifth joint. In other words, the wrist section 27 is rotatable around the fifth axis AX5 orthogonal to the fourth axis AX4. A sixth joint coupling the wrist section 27 and the flange section 28 is provided. The flange section 28 is rotatable in a twisting direction around a coupling axis (i.e., a sixth axis AX6) of the sixth joint. In other words, the flange section 28 is rotatable around the sixth axis AX6 orthogonal to the fifth axis AX5.

The shoulder section 23, the lower arm section 24, the first upper arm section 25, the second upper arm section 26, the wrist section 27, and the flange section 28 are arranged in sequence, thus forming an arm 31 of the robot body 21. A distal end portion of the arm 31 includes a flange section 28 and an end effector 35 is mounted on the flange section 28. Work in which the robot 15 according to the present embodiment engages includes a plurality of work scenes. Different types of end effectors 35 are to be attached in accordance with the work scenes. Specifically, for a work scene where the robot 15 is to pick up and carry a workpiece W1, a hand is to be attached as the end effector 35. For a work scene where the workpiece W1 is to be polished, a polishing device is to be attached as the end effector 35.

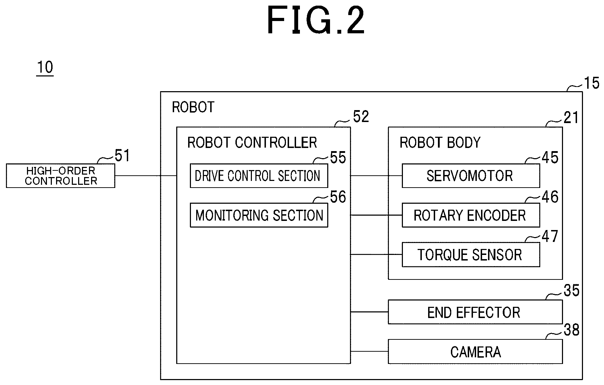

For the joints, respective servomotors 45 for driving the joints, rotary encoders 46 that detect rotation angles of the joints (i.e., the axes), and torque sensors 47 that detect rotation torques of the joints (i.e., the axes) are disposed in the arm 31 as illustrated in Fig. 2. In addition, a camera 38 for identifying a position of the workpiece W1 or the like is attached to the flange section 28 of the arm 31. It should be noted that Fig. 1 illustrates neither the servomotors 45 nor the camera 38.

The servomotors 45, the rotary encoders 46, the torque sensors 47, and the camera 38 are connected to a robot controller 52. A drive control section 55 of the robot controller 52 performs a drive control of the servomotors 45 on the basis of position data or the like, namely, encoder data or the like indicating the rotation angles (i.e., rotation positions), acquired from the rotary encoders 46.

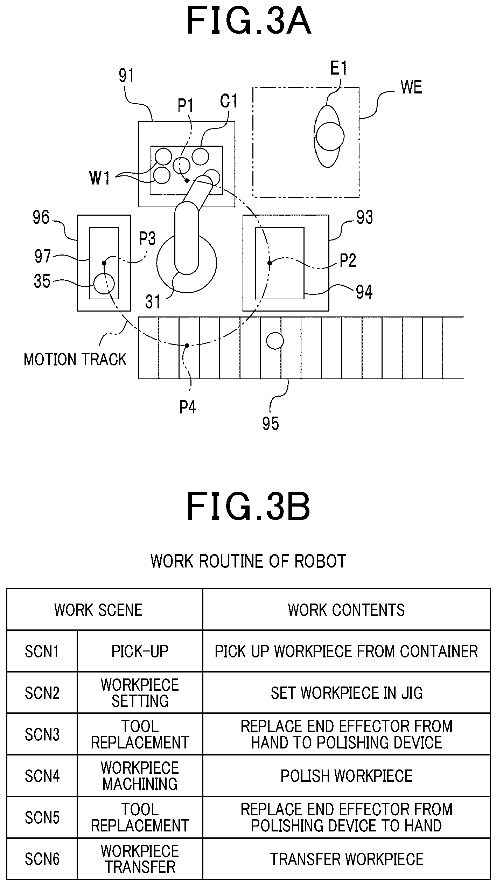

In addition, the robot controller 52 is connected to a high-order controller 51 (for example, a personal computer or a teaching pendant). The high-order controller 51 is installed with an application for creating a control program for the robot 15 (specifically, a setting assistance application that assists a user in setting (including so-called teaching) a motion of the robot 15). The control program created by the high-order controller 51 is sent to the robot controller 52. The drive control section 55 of the robot controller 52 performs a drive control of the robot body 21 and the end effector 35 on the basis of the control program. This means that the control program defines work contents, work sequence, and the like of the robot 15. Description will be made below on the contents and flow (i.e., routine) of work of the robot 15 according to the present embodiment with reference to Figs. 3A and 3B.

A placement table 91, a working table 93, a conveyor 95, and a replacement table 96 are disposed around the robot 15. A container C1 storing a plurality of workpieces W1 is to be placed on the placement table 91. The working table 93 is to be used for machining (for example, polishing) the workpieces W1. The conveyor 95 is to be used to carry the machined workpieces W1. The end effector 35 for replacement is to be prepared on the replacement table 96.

The robot 15 first causes the distal end portion of the arm 31 to move from a preset standby position (i.e., initial position) to a control point P1 above the placement table 91 and identifies a position of the container C1 and positions of the workpieces W1 by using the attached camera 38. The robot 15 then picks up one of the workpieces W1 from the container C1 using a hand of the distal end portion of the arm 31 (a work scene SCN1: pick-up). Next, the robot 15 causes the distal end portion of the arm 31 to move to a control point P2 above the working table 93 with the picked workpiece W1 held and sets the workpiece W1 in a jig 94 mounted on the working table 93 (a work scene SCN2: workpiece setting). After that, the robot 15 causes the distal end portion of the arm 31 to move to a control point P3 above the replacement table 96, returns the hand to a holder 97 mounted on the replacement table 96, and has attached thereto a polishing device held in the holder 97 (a work scene SCN3: tool replacement). After the replacement to the polishing device, the robot 15 causes the distal end portion of the arm 31 to move to the control point P2 and polishes a predetermined portion (for example, an upper surface) of the workpiece W1 (a work scene SCN4: workpiece machining). After the polishing of the workpiece W1, the robot 15 causes the distal end portion of the arm 31 to move to the control point P3, returns the polishing device to the holder 97, and has attached thereto the hand held in the holder 97 (a work scene SCN5: tool replacement). After the replacement to the hand, the robot 15 again causes the distal end portion of the arm 31 to move to the control point P2, removes the workpiece W1 from the jig 94, causes the distal end portion of the arm 31 to move to a control point P4 above the conveyor 95, and transfers the workpiece W1 to the conveyor 95 (a work scene SCN6: workpiece transfer). After that, the robot 15 causes the distal end portion of the arm 31 to return to the above-described standby position. The above-described work scene SCN1 to the work scene SCN6 are to be repeated.

It should be noted that the distal end portion of the arm 31 of the robot 15 of the present embodiment may include at least one of the flange section 28 and the end effector 35 provided at a distal end of the arm 31.

A work area WE for a person (for example, a worker E1) to work is provided in the vicinity of an installation place of the robot 15. The worker E1 performs work to supply the workpiece W1 to the robot 15 (i.e., switching of the container C1 placed on the placement table 91) and performs inspection and an assembly work of the above-described polished workpiece W1 carried through the conveyor 95.

Here, referring again to Fig. 1, a supplementary description will be made on a polishing device 35A to be attached to the robot 15. The polishing device 35A includes a disc for polishing rotatable around a center axis CL and a drive motor that causes the disk to rotate. The drive motor is connected to the robot controller 52 and a rotation speed or the like of the drive motor is controlled by the robot controller 52. One of plate surfaces (i.e., a polishing surface 36A) of the disc of the polishing device 35A is pressed against the workpiece W1 to polish the workpiece W1.

Specifically, the center axis CL is coaxial with the sixth axis AX6 of the distal end portion of the arm 31 (for example, the flange section 28). An orientation of the polishing surface 36A is the same as an orientation of an attachment surface 29 of the flange section 28 for the end effector 35. In a drive control of the robot 15 according to the present embodiment, an operation program corresponding to an operation instruction from the high-order controller 51 is read and an action target position (i.e., the control point) is identified in accordance with the operation program. After that, the arm 31 acts such that a reference point (i.e., a tool center point TCP) of the end effector 35 passes through a target track smoothly connecting a current position and the action target position. It should be noted that in the polishing device 35A according to the present embodiment, an intersection between the polishing surface 36A and the center axis CL serves as the tool center point TCP.

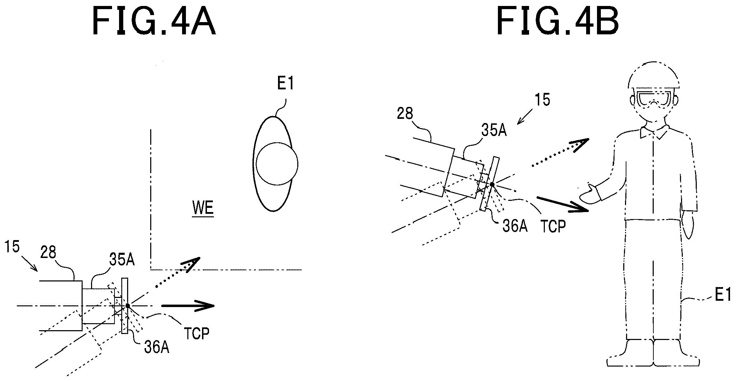

Although the details will be described later, the robot 15 according to the present embodiment has a function to monitor a position of the distal end portion (in detail, a position of the tool center point TCP) of the arm 3 of the robot 15 and cause, in response to the distal end portion of the arm 31 approaching the work area WE, or the like, the robot 15 to perform the protective stop. This is preferable for improving the safety of the worker E1. However, for example, even in a case where the tool center point TCP matches between different two situations (for example, a solid line and a broken line) as illustrated in Fig. 4A, an attitude of the distal end portion of the arm 31 (i.e., the orientation of the distal end portion of the arm 31) of the robot 15 does not always match. It means that even in a case where the tool center point TCP is at the same position, the attitude of the distal end portion of the arm 31 differs depending on a process through which the tool center point TCP reaches that position. The distal end portion of the arm 31 of the robot 15 may face toward the work area WE in some situations. For example, in a case where the polishing device 35A is attached as the end effector 35 and the distal end portion of the arm 31 of the robot 15 (i.e., the polishing surface 36A of the polishing device 35A) faces toward the work area WE, the worker E1 is highly likely to touch the polishing surface 36A if accidentally touching the robot 15. The probability of the occurrence of such a problem is assumed to be high in a case where the distal end portion of the arm 31 of the robot 15 is placed near the work area WE. It should be noted that even though the tool center point TCP matches between different two situations, a distance between the end effector 35 and the work area is also likely to be different due to a difference in the orientation of the distal end portion of the arm 31 depending on a shape or the like of the end effector 35. It is also assumed that the possibility of the worker E1 accidentally touching the end effector 35 will be different due to such a difference in the distance.

In addition, the drive control is performed such that the distal end portion of the arm 31 is not basically faced upward under the situation where the polishing device 35A is attached. However, the possibility that an accidental factor or the like causes the distal end portion of the arm 31 to face upward is undeniable. For example, in a case where the worker E1 works at a position near the robot 15, it is assumed that the distal end portion of the arm 31 of the robot 15 may face upward (for example, toward a face of the worker E1) (see, for example, Fig. 4B). In this case, the worker E1 may be likely to feel uncomfortable with the robot 15. Such discomfort would become an obstacle to promotion of cooperation between the person and the robot.

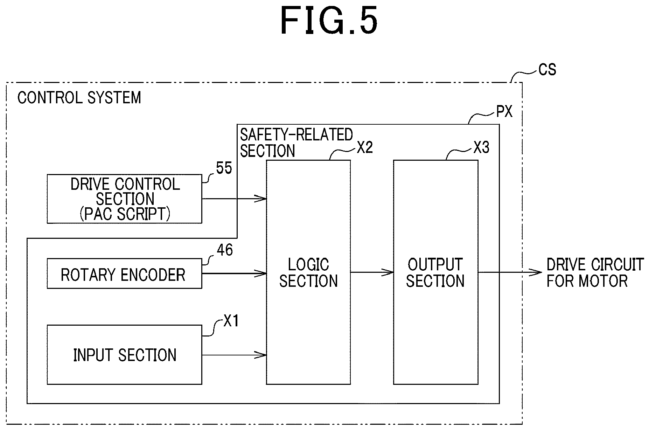

The present embodiment is characterized in that measures are taken in consideration of these concerns. Specifically, the attitude of the distal end portion of the arm 31 of the robot 15 (the orientation of the distal end portion of the arm 31) is monitored and the motion of the robot 15 is restricted if the orientation is unsuitable. Description will be made on the outline of a configuration related to the action monitoring of the robot 15 with reference to Fig. 5. After that, a detailed description will be made on a distinguishing configuration of the present embodiment.

The components of the control system CS (i.e., a robot control system) applied to the robot 15 are classified into a safety-related section PX and a non-safety-related section. The safety-related section PX outputs a safety-related output signal in response to a safety-related input signal, thereby implementing a safety function of the robot 15. In a case where the actions of the arm 31 and the end effector 35 are permitted as the safety is confirmed by the safety-related section PX, the non-safety-related section performs a drive control of the arm 31 and the end effector 35.

The safety-related section PX includes an input section X1 that receives the above-described safety-related input signal, a logic section X2 that performs safety confirmation, and an output section X3 that outputs a safety-related output signal. In the present embodiment, for example, an emergency stop button corresponds to the input section X1. A monitoring section 56 (see, for example, Fig. 2) provided in the robot controller 52 corresponds to the logic section X2. A safety contactor pertaining to the robot controller 52 corresponds to the output section X3.

The safety contactor is connected to switches provided in drive circuits for the servomotors 45 of the arm 31. In response to the safety-related output signal being outputted from the safety contactor to the switches, power supply to the servomotors 45 is restricted/cut off to forcefully decelerate/stop the robot 15.

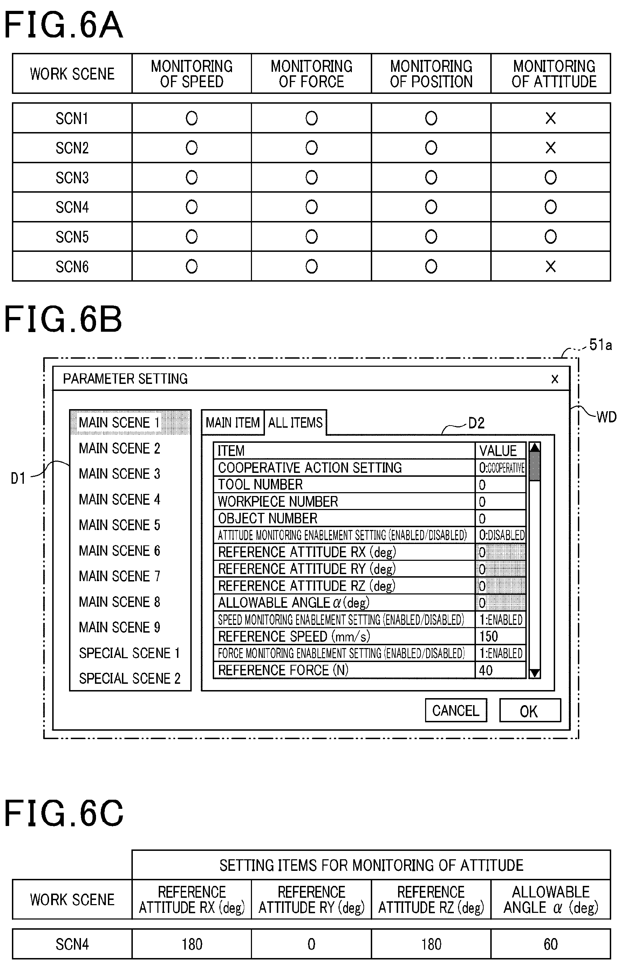

The safety-related section PX described in the present embodiment includes the rotary encoders 46 and the torque sensors 47 in addition to the above-described emergency stop button. It means that detection signals from the rotary encoders 46 and the torque sensors 47 are inputted as the safety-related input signals to the logic section X2. The logic section X2 monitors the action of the arm 31 on the basis of the detection signals from the rotary encoders 46 and the torque sensors 47. In more detail, the logic section X2 identifies a speed, a force (i.e., thrust force), a position (i.e., coordinates), and an attitude of a tip of a hand of the robot 15 (i.e., the arm 31). For example, a monitoring function of the monitoring section 56 includes a function to monitor the speed of the distal end portion of the arm 31, a function to monitor the force of the distal end portion of the arm 31, a function to monitor the position of the distal end portion of the arm 31, and a function to monitor the attitude of the distal end portion of the arm 31 as illustrated in Fig. 6A.

For monitoring the speed of the distal end portion of the arm 31, a displacement speed at the tool center point TCP is calculated on the basis of the detection signals from the rotary encoders 46 and the calculated speed is compared with a preset speed reference value. In response to the calculated speed exceeding the speed reference value, the protective stop of the robot 15 is performed. For monitoring the force of the distal end portion of the arm 31, the force of the distal end portion of the arm 31 (specifically, a force generated in the flange section 28) is calculated on the basis of the detection signals from the torque sensors 47 and the calculated force is compared with a preset force reference value. In response to the calculated force exceeding the force reference value, the protective stop of the robot 15 is performed. For monitoring the position of the distal end portion of the arm 31, the position of the tool center point TCP is identified on the basis of the detection signals from the rotary encoders 46 and the identified position is compared with a preset reference area. In response to the identified position being out of the reference area, the protective stop of the robot 15 is performed.

It is possible to set these four monitoring functions at least for each work scene. In the present embodiment, for the work scenes SCN1, SCN2, and SCN6, the monitoring of the speed, the monitoring of the force, and the monitoring of the position of the distal end portion of the arm 31 are enabled, whereas the monitoring of the attitude of the distal end portion of the arm 31 is disabled as illustrated in Fig. 6A. For the work scenes SCN3 to SCN5, the monitoring of the speed, the monitoring of the force, the monitoring of the position, and the monitoring of the attitude of the distal end portion of the arm 31 are all enabled.

The settings of these items are automatically switched in accordance with transition of the work scene (i.e., the position of the distal end portion of the arm 31) during automatic running of the robot 15. Specifically, in moving the distal end portion of the arm 31 of the robot 15 from the initial position to the control point P1, the setting of monitoring is switched to the setting corresponding to the work scene SCN1. In moving the distal end portion of the arm 31 of the robot 15 from the control point P1 to the control point P2, the setting of monitoring is switched to the setting corresponding to the work scene SCN2. In moving the distal end portion of the arm 31 from the control point P2 to the control point P3, the setting of monitoring is switched to the setting corresponding to the work scene SCN3. In moving the distal end portion of the arm 31 from the control point P3 to the control point P2, the setting of monitoring is switched to the setting corresponding to the work scene SCN4. In moving the distal end portion of the arm 31 from the control point P2 to the control point P3, the setting of monitoring is switched to the setting corresponding to the work scene SCN5. In moving the distal end portion of the arm 31 from the control point P3 to the control point P4 through the control point P2, the setting of monitoring is switched to the setting corresponding to the work scene SCN6.

In the present embodiment, in creating the control program in the high-order controller 51 by teaching or the like, it is possible for the user to set the respective references for the monitoring of the speed, the monitoring of the force, the monitoring of the position, and the monitoring of the attitude as desired. Fig. 6B illustrates, by way of example, a setting screen WD to be displayed on a display 51a of the high-order controller 51. A work scene list D1 and a setting item list D2 related to a selected work scene are displayed in the setting screen WD. One of the items is selected from the displayed setting item list D2, which make it possible to switch enabling/disabling of the monitoring function and input a numeral value.

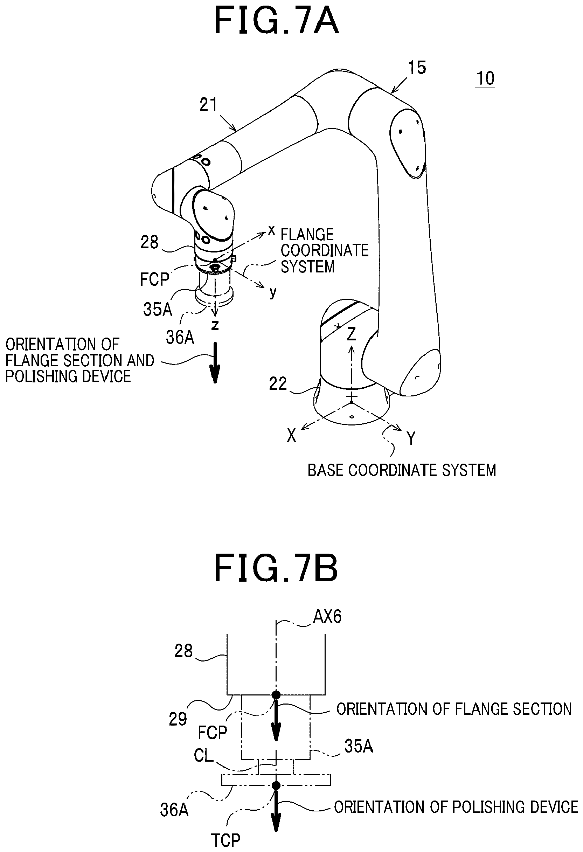

For the monitoring of the attitude of the distal end portion of the arm 31, there are, in addition to an item for instructing enabling/disabling of the monitoring function, four setting items prepared: a reference attitude RX (deg), a reference attitude RY (deg), a reference attitude RZ (deg), and an allowable angle $\alpha$ (deg) (see, for example, Fig. 6C). Here, description is made on these setting items with reference to Fig. 7. It should be noted that Fig. 7A illustrates an orthogonal coordinate system of the base section 22, i.e., base coordinate system, as X-Y-Z and an orthogonal coordinate system of the flange section 28, i.e., flange coordinate system, as x-y-z. The base coordinate system is a coordinate system with coordinate axes unchangeable in orientation with the action of the robot 15. The flange coordinate system is a coordinate system with coordinate axes changeable in orientation with the action of the robot 15.

In the present embodiment, an orientation of the distal end portion of the arm 31 (for example, the flange section 28) and an orientation of the polishing device 35A are in alignment with each other as illustrated in Fig. 7B. In other words, the orientation of the flange section 28 and the orientation of the end effector 35 in the distal end portion of the arm 31 are in alignment with each other. In a case where the orientation of the flange section 28 is not in alignment with the orientation of the end effector 35, the orientation of the flange section 28 may be treated as the orientation of the distal end portion of the arm 31 or the orientation of the end effector 35 may be treated as the orientation of the distal end portion of the arm 31. It should be noted that in terms of preventing contact with the end effector 35, the orientation of the flange section 28 may be treated as the orientation of the distal end portion of the arm 31. In addition, in order to prevent contact with a part of the end effector 35 (for example, the polishing surface, a cutter edge, or an outlet), the orientation of the end effector 35 may be treated as the orientation of the distal end portion of the arm 31.

The reference attitude RX, the reference attitude RY, and the reference attitude RZ are items to define the attitude of the distal end portion of the arm 31 (i.e., an orientation of reference of the distal end portion of the arm 31), which serves as a reference for monitoring in the corresponding work scene. In other words, these are items to define an orientation of reference of the flange section 28 (i.e., the polishing surface 36A) in the base coordinate system. The reference attitude RX is a rotation angle of the flange coordinate system whose rotation axis is an X-axis of the base coordinate system (i.e., an X-axis-based rotational component). The reference attitude RY is a rotation angle of the flange coordinate system whose rotation axis is a Y-axis of the base coordinate system (i.e., a Y-axis-based rotational component). The reference attitude RZ is a rotation angle of the flange coordinate system whose rotation axis is a Z-axis of the base coordinate system (i.e., a Z-axis-based rotational component). In other words, the attitude of the distal end portion of the arm 31 is expressed by a combination of the rotational component around the X-axis of the base coordinate system, the rotational component around the Y-axis thereof, and the rotational component around the Z-axis thereof.

For example, the flange coordinate system is rotated in a clockwise direction around the Y-axis of the base coordinate system by 180 deg, which causes the orientations of the axes of the rotated flange coordinate system to be aligned with the orientations of the respective axes of the base coordinate system. Here, in a case where the resulting attitude is to be set as the reference attitude, the user sets the reference attitude RX = 0 deg, the reference attitude RY = 180 deg, and the reference attitude RZ = 0 deg.

The allowable angle $\alpha$ is an index indicating the degree of allowance of a deviation (hereinafter, also referred to as attitude deviation), i.e., allowable range for a deviation, between the current attitude (hereinafter, also referred to as actual attitude) of the distal end portion of the arm 31 and the attitude of reference (hereinafter, also referred to as reference attitude) of the distal end portion of the arm 31 defined by the reference attitudes RX to RZ.

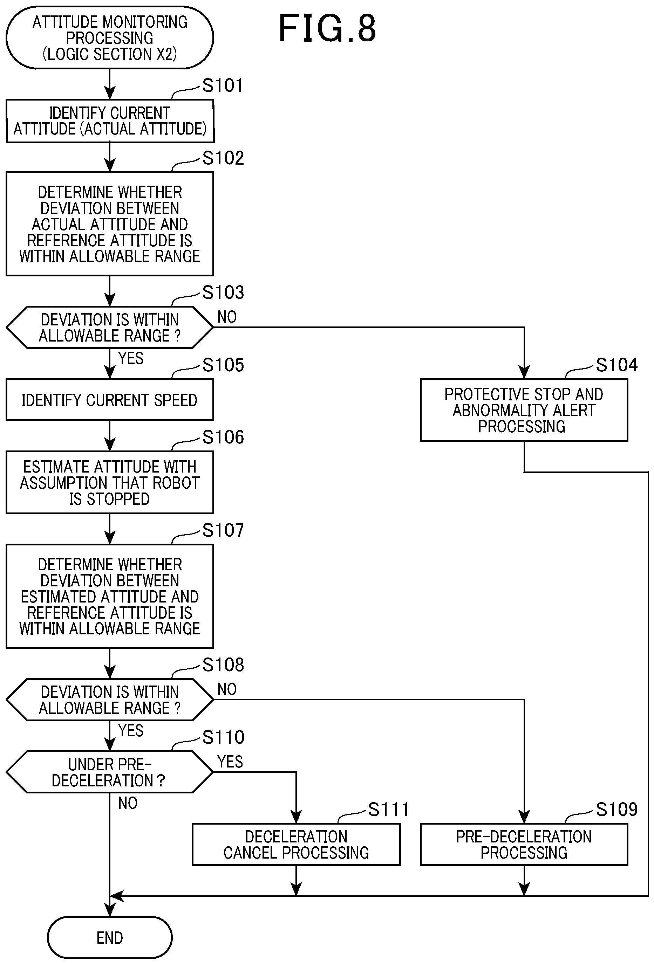

Next, description will be made on attitude monitoring processing, which is to be performed as a part of action monitoring processing by the logic section X2 (i.e., the monitoring section 56), with reference to a flowchart in Fig. 8. The attitude monitoring processing is performed as part of regular processing by the logic section X2 as long as the setting for the attitude monitoring is enabled and the protective stop is not in progress.

In the attitude monitoring processing, the logic section X2 first calculates an actual attitude in the base coordinate system from respective encoder values acquired from the rotary encoders 46 (Step S101). Specifically, the logic section X2 calculates three items, an actual attitude RX' (deg), an actual attitude RY' (deg), and an actual attitude RZ' (deg). The actual attitude RX' (deg) is a rotation angle of the flange coordinate system whose rotation axis is the X-axis of the base coordinate system (i.e., the X-axis-based rotational component). The actual attitude RY' (deg) is a rotation angle of the flange coordinate system whose rotation axis is the Y-axis of the base coordinate system (i.e., the Y-axis-based rotational component). The actual attitude RZ' (deg) is a rotation angle of the flange coordinate system whose rotation axis is the Z-axis of the base coordinate system (i.e., the Z-axis-based rotational component).

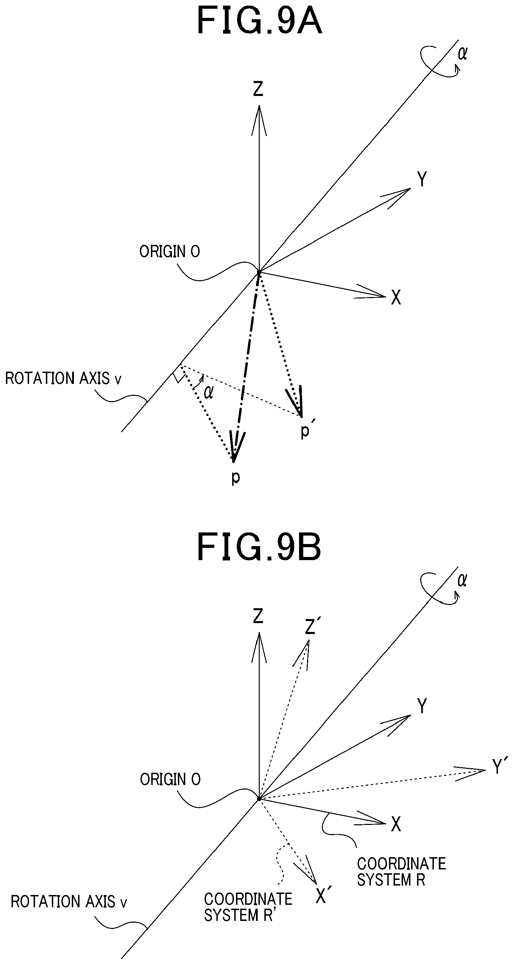

After that, the logic section X2 determines whether a deviation between the actual attitude and a reference attitude (hereinafter, also referred to as attitude deviation) is within an allowable range defined by the allowable angle α (Step S102). In the present embodiment, a computation method related to the determination is one of features. A specific description will be made below on the computation method with reference to Figs. 9A and 9B.

As illustrated in Fig. 9A, a vector p on the X-Y-Z coordinate system is rotated by an angle α around a rotation axis v passing through an origin O. A rotated vector p' is represented by the following expression.

[Math. 1]

$$p' = K(\alpha)p$$

The K(α) is a rotation matrix and represented by the following expression in accordance with Rodrigues' rotation formula. It should be noted that a value in a range of -180 deg to 0 deg is calculated by inverting the rotation axis v and, accordingly, a range of the angle α is defined as 0 deg to 180 deg.

[Math. 2]

$$K(\alpha)=$$
$$\begin{pmatrix} v_x^2(1-\cos(\alpha))+\cos(\alpha) & v_x v_y(1-\cos(\alpha))-v_z\sin(\alpha) & v_z v_x(1-\cos(\alpha))+v_y\sin(\alpha) \\ v_x v_y(1-\cos(\alpha))+v_z\sin(\alpha) & v_y^2(1-\cos(\alpha))+\cos(\alpha) & v_y v_z(1-\cos(\alpha))-v_x\sin(\alpha) \\ v_z v_x(1-\cos(\alpha))-v_y\sin(\alpha) & v_y v_z(1-\cos(\alpha))+v_x\sin(\alpha) & v_z^2(1-\cos(\alpha))+\cos(\alpha) \end{pmatrix}$$

$v_x$, $v_y$, and $v_z$ are components of the respective axes of a reference coordinate system O-XYZ of a unit vector in a rotation-axis-v direction. Here, description is also made on a case where the coordinate system is rotated. As illustrated in Fig. 9B, an X-Y-Z coordinate system R is rotated by the angle α around a rotation axis v passing through the origin O. A rotated X'-Y'-Z' coordinate system R' is represented by the following expression.

[Math. 3]

$$R' = K(\alpha)\,R$$

Here, the angle α may be considered as a differential Δα of angle between the coordinate system R and the coordinate system R'. In addition, the X-axis, the Y-axis, and the Z-axis of the coordinate system R are orthogonal to one another, so that the coordinate system R is a so-called orthogonal matrix. Thus, as for the coordinate system R, an inverse matrix is equivalent to a transposed matrix. Accordingly, the angle differential Δα between the coordinate system R and the coordinate system R' is represented by the following expression.

[Math. 4]

$$K(\Delta\alpha) = R'R^{-1} = R'R^T$$

Here, according to the above-mentioned Rodrigues' rotation formula, a diagonal component of the rotation matrix K(α) is represented by the following expression.

[Math. 5]

$$trK(\alpha) = (v_x^2 + v_y^2 + v_z^2)(1 - \cos(\alpha)) + 3\cos(\alpha)$$

Then, as the sum of the respective squares of the components of the unit vector is 1, the expression is transformed as follows.

[Math. 6]

$$trK(\alpha) = 1 + 2\cos(\alpha)$$

As described above, since the range of the angle $\alpha$ is 0 deg to 180 deg, cos ($\Delta\alpha$) is equal to or more than cos($\alpha$) in a case where $\alpha$ is equal to or more than $\Delta\alpha$. Hence, in a case where the following expression is satisfied, $\alpha$ is equal to or more than $\Delta\alpha$.

[Math. 7]

$$trK(\Delta\alpha) = 1 + 2\cos(\Delta\alpha) \geq 1 + 2\cos(\alpha)$$

Therefore, in a case where the following expression of the coordinate system R corresponding to the reference attitude, the coordinate system R' corresponding to the actual attitude, and the allowable angle $\alpha$ is satisfied, the logic section X2 determines that the attitude deviation is within the allowable range.

[Math. 8]

$$tr(R'R^T) \geq 1 + 2\cos(\alpha)$$

In contrast, in a case where the following expression is satisfied, the logic section X2 determines that the attitude deviation is out of the allowable range.

[Math. 9]

$$tr(R'R^T) < 1 + 2\cos(\alpha)$$

It should be noted that assuming that the reference attitude RX = l (deg), the reference attitude RY = m (deg), and the reference attitude RZ = n (deg), the coordinate system R is represented by the following expression.

[Math. 10]

$$R = T_z T_y T_x = \begin{pmatrix} \cos(n) & -\sin(n) & 0 \\ \sin(n) & \cos(n) & 0 \\ 0 & 0 & 1 \end{pmatrix} \begin{pmatrix} \cos(m) & 0 & \sin(m) \\ 0 & 1 & 0 \\ -\sin(m) & 0 & \cos(m) \end{pmatrix} \begin{pmatrix} 1 & 0 & 0 \\ 0 & \cos(l) & -\sin(l) \\ 0 & \sin(l) & \cos(l) \end{pmatrix}$$

$$= \begin{pmatrix} \cos(m)\cos(n) & \sin(l)\sin(m)\cos(n) - \cos(l)\sin(n) & \cos(l)\sin(m)\cos(n) + \sin(l)\sin(n) \\ \cos(m)\sin(n) & \sin(l)\sin(m)\sin(n) + \cos(l)\cos(n) & \cos(l)\sin(m)\sin(n) - \sin(l)\cos(n) \\ -\sin(m) & \sin(l)\cos(m) & \cos(l)\cos(m) \end{pmatrix}$$

Then, the transposed matrix of the coordinate system R is represented by the following expression.

[Math. 11]

$R^T$

$$= \begin{pmatrix} \cos(m)\cos(n) & \cos(m)\sin(n) & -\sin(m) \\ \sin(l)\sin(m)\cos(n) - \cos(l)\sin(n) & \sin(l)\sin(m)\sin(n) + \cos(l)\cos(n) & \sin(l)\cos(m) \\ \cos(l)\sin(m)\cos(n) + \sin(l)\sin(n) & \cos(l)\sin(m)\sin(n) - \sin(l)\cos(n) & \cos(l)\cos(m) \end{pmatrix}$$

In addition, assuming that the above-described actual attitude RX' = a (deg), actual attitude RY' = b (deg), and actual attitude RZ' = c (deg), the coordinate system R' is represented by the following expression.

[Math. 12]

$R'$

$$= \begin{pmatrix} \cos(b)\cos(c) & \sin(a)\sin(b)\cos(c) - \cos(a)\sin(c) & \cos(a)\sin(b)\cos(c) + \sin(a)\sin(c) \\ \cos(b)\sin(c) & \sin(a)\sin(b)\sin(c) + \cos(a)\cos(c) & \cos(a)\sin(b)\sin(c) - \sin(a)\cos(c) \\ -\sin(b) & \sin(a)\cos(b) & \cos(a)\cos(b) \end{pmatrix}$$

In a case where it is determined that the attitude deviation is not within the allowable range by the computation method described above in detail (Step S103: NO), the logic section X2 performs processing for protective stop and processing for abnormality alert (Step S104) and terminates the attitude monitoring processing. In the protective stop processing, the logic section X2 causes the robot 15 to stop by forcefully cutting off power supply to the servomotors 45 and the polishing device 35A. Then, in the abnormality alert processing, the logic section X2 causes an alert lamp provided in the robot 15 to be turned on and sends information indicating the occurrence of an abnormality to a management system or the like of a factory. In a case where the robot 15 goes into a protective stop state, it is possible for the user to cancel the protective stop state by performing a recovery operation or the like.

In a case where it is determined that the attitude deviation is within the allowable range (Step S103: YES), the logic section X2 calculates a current speed of the distal end portion of the arm 31 on the basis of the encoder values acquired from the rotary encoders 46 (Step S105). The logic section X2 estimates, assuming that the protective stop is started at this point of time to stop the robot 15, the resulting attitude of the distal end portion of the arm 31 (specifically, an estimated attitude PRX', an estimated attitude PRY', and an estimated attitude PRZ') on the basis of the calculated speed (Step S106). The logic section X2 determines whether a deviation between the attitude that is estimated (i.e., estimated attitude) and the above-described reference attitude is within the allowable range. A computation method for this determination is similar to step S102 and a detailed description thereof is omitted, accordingly.

In a case where it is determined that the deviation between the attitude that is estimated (i.e., estimated attitude) and the above-described reference attitude is not within the allowable range (Step S108: NO), the logic section X2 performs pre-deceleration processing (Step S109) and terminates the attitude monitoring processing. In the pre-deceleration processing, the logic section X2 causes the robot 15 (i.e., the distal end portion of the arm 31) to decelerate by restricting (i.e., reducing) power supply to the servomotors 45. This makes a problem, such as a considerable deviation of the attitude of the distal end portion of the arm 31 from the estimation, unlikely to occur even though the protective stop is performed. It should be noted that in a case where it is determined NO in Step S108 during pre-deceleration through the deceleration processing, the logic section X2 readjusts a deceleration level in the pre-deceleration processing.

In a case where it is determined that the deviation between the attitude that is estimated (i.e., estimated attitude) and the above-described reference attitude is within the allowable range (Step S108: YES), the logic section X2 determines whether pre-deceleration is ongoing. In a case where pre-deceleration is not ongoing (Step S110: NO), the logic section X2 directly terminates the attitude monitoring processing. In contrast, in a case where pre-deceleration is ongoing, the logic section X2 performs deceleration cancel processing (Step S111) and then terminates the attitude monitoring processing.

The first embodiment described above in detail is expected to produce the following advantageous effects.

The arm 31 of the robot 15 includes the plurality of joints each independently acting. The distal end portion of the arm 31 thus moves with a high flexibility. This is preferable for increasing the variety of types of work for the robot 15 to be able to engage in. However, such a high flexibility may cause the following event. As illustrated by way of example in Figs. 4A and 4B, even though the position of the distal end portion of the arm 31 of the robot 15 is the same between different situations, the orientation of the distal end portion of the arm 31 may be different in some cases. For example, even in a case where the distal end portion of the arm 31 is to be moved to the same position, different processes of movement may lead to different orientations of the distal end portion of the arm 31 having reached the same position. In a case where the work area WE for a person is provided near the robot 15 as illustrated by way of example in Fig. 3, the worker E1 is highly likely to touch the distal end portion of the arm 31 if the distal end portion of the arm 31 faces toward the work area WE. For an outer peripheral portion of the robot body 21, a rounded shape is adopted and/or a relatively soft material is used in consideration of contact with a person in some cases. In contrast, for the end effector 35, which serves as a working section that directly works on the workpiece W1, such a consideration is difficult to make. It is thus not preferable that the worker E1 touch the distal end portion of the arm 31 of the robot 15 as described above in terms of protecting both the robot 15 and the worker E1. In this regard, in the configuration according to the present embodiment, the allowable range for the attitude of the distal end portion of the arm 31 of the robot 15 (i.e., the orientation of the distal end portion of the arm 31) is set and it is monitored whether the attitude of the distal end portion of the arm 31 is within the allowable range. In a case where the attitude is out of the allowable range, the protective stop of the robot 15 (i.e., the arm 31) is performed. This makes it possible to prevent the distal end portion of the arm 31 from facing an unfavorable direction (for example, the above-described direction toward the work area WE) to reduce the occurrence of the above-described problem. This is preferable for further improving the safety of the robot 15.

An industrial robot is usually attachable with an end effector in a replaceable manner in order to engage in a variety of types of work. However, acquiring information regarding the orientation of the distal end portion of the arm on the basis of the end effector makes a configuration related to monitoring complicated and would become a factor that hampers the monitoring function. In this regard, the orientation of not the end effector but the attachment section for the end effector (for example, the flange section) is monitored, which makes it possible favorably eliminate a safety concern.

In addition, in the present embodiment, the setting for monitoring is automatically switched in accordance with a work scene. However, even in a case where the end effector is replaced in accordance with the switching, no malfunction (for example, erroneous protective stop) on a program occurs.

The orientation of reference and the allowable range are different depending on the work scene in which the robot 15 engages, or the like. In the present embodiment, the orientation of reference and the allowable range are set separately for each work scene, which makes it possible to appropriately monitor the attitude of the distal end portion of the arm 31 (i.e., the orientation of the distal end portion of the arm 31) in accordance with a work scene.

The end effector 35 attached to the attachment surface 29 of the flange section 28 is located ahead in a direction for the attachment surface 29 to face. Thus, an orientation of the attachment surface 29 for the end effector 35 is subjected to the above-described monitoring. This monitoring makes it possible to favorably exhibit the effect in preventing, for example, a person from touching the end effector 35.

When the protective stop of the robot 15 (i.e., the arm 31) is performed, the arm 31 is not immediately stopped even though power supply to the servomotors 45 is stopped, which results in a time lag before a full stop. It is not preferable that due to such a time lag, the arm 31 be stopped in a state where the attitude of the distal end portion of the arm 31 is out of the allowable range even though the protective stop is performed. In this regard, the configuration according to the present embodiment causes deceleration of the arm 31 to start prior to the protective stop in response to a situation where an execution condition for the protective stop regarding the attitude of the distal end portion of the arm 31 may be satisfied. This makes it possible to minimize the above-described time lag to favorably prevent the occurrence of the above-described problem.

The above-described time lag depends on a movement speed of the distal end portion of the arm 31. Accordingly, in the present embodiment, the movement speed is taken into consideration to determine whether pre-deceleration is to be started. This makes it possible to prevent deceleration from becoming insufficient and make a problem, such as a decrease in the work efficiency of the robot 15 due to frequent unnecessary deceleration, unlikely to occur.

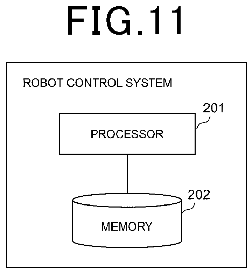

It should be noted that the robot system 10 (in particular, robot controller 52) may include a processor 201 such as a central processing unit (CPU) and a memory 202 such as a read only memory (ROM) or a random-access memory (RAM) as illustrated in Fig. 11. The processing of the above-described monitoring section 56 (i.e., the logic section X2) and the like may be implemented by the processor 201 executing a program stored in the memory 202.

<Second Embodiment>

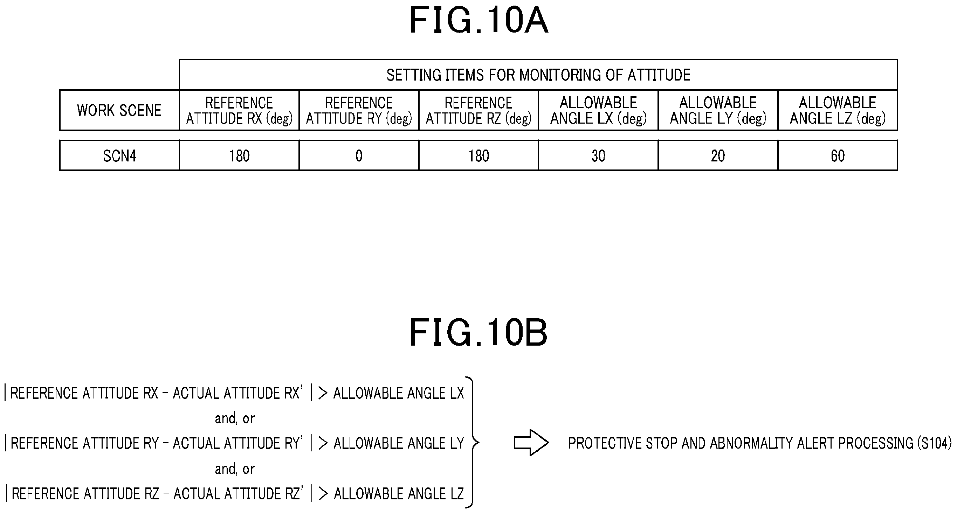

In the above-described first embodiment, the allowable range for the orientation of the distal end portion of the arm 31 is defined by a single setting item (i.e., allowable angle $\alpha$). The present embodiment is different from the first embodiment in that it is possible to set respective allowable ranges for an attitude related to a rotation angle around the X-axis, an attitude related to a rotation angle around the Y-axis, and an attitude related to a rotation angle around the Z-axis. Description will be made below on the difference with reference to Fig. 10A and Fig. 10B. It should be noted that description on the configuration common to the first embodiment and the second embodiment is omitted as appropriate.

As illustrated in Fig. 10A, the reference attitude RX, the reference attitude RY, and the reference attitude RZ are also items for the user to set in the present embodiment as in the first embodiment. However, in place of the above-

described allowable angle $\alpha$, an allowable angle LX that defines an allowable range for a deviation (i.e., an attitude deviation) between the reference attitude RX and the actual attitude RX', an allowable angle LY that defines an allowable range for a deviation (i.e., an attitude deviation) between the reference attitude RY and the actual attitude RY', and an allowable angle LZ that defines an allowable range for a deviation (i.e., an attitude deviation) between the reference attitude RZ and the actual attitude RZ' are added as setting items.

As illustrated in Fig. 10B, in a case where at least one of the attitude deviation between the reference attitude RX and the actual attitude RX' > the allowable angle LX, the attitude deviation between the reference attitude RY and the actual attitude RY' > the allowable angle LY, or the attitude deviation between the reference attitude RZ and the actual attitude RZ' > the allowable angle LZ is satisfied, the protective stop and the abnormality alert processing are performed in Step S104 in the attitude monitoring processing. In contrast, in a case where any one of the three conditions is not satisfied, neither the protective stop nor the abnormality alert processing is to be performed.

<Other Embodiment>

It should be noted that embodiments according to the present disclosure are not limited to the above-described embodiments and may be modified, for example, as follows. It should be noted that the following configurations may be individually applied to the above-described embodiments or a combination of all or a part of the following configurations may be applied to the above-described embodiments.

(1) In the above-described embodiments, the attitude of the distal end portion of the arm 31 (for example, the flange section 28) is monitored. However, the attitude of the end effector 35 may be monitored. For example, it is assumed that the end effector 35 is attached with a polishing surface, a laser beam outlet, or the like of the end effector 35 being in a lateral orientation relative to the flange section 28 (for example, an orientation orthogonal to the sixth axis AX6). In this case, the attitude of the end effector 35 may be monitored in consideration of a difference between the orientation of the flange section 28 (i.e., the orientation of the sixth AX6) and the orientation of the polishing surface or the like. In addition, it is assumed that the end effector 35 has an angle changing function to change the orientation of the own polishing surface or the like. In this case, the robot controller 52 may acquire information regarding a change in the angle of the end effector 35 to monitor the attitude of the distal end portion of the arm 31 of the robot 15 on the basis of the information.

(2) In the above-described embodiments, the orientation of the center axis (i.e., the sixth axis AX6) of the flange section 28 is aligned with the orientation of the attachment surface 29 of the flange section 28 for the end effector 35. However, embodiments is not limited to this. It is optional whether the orientation of the center axis (i.e., the sixth axis AX6) of the flange section 28 is aligned with the orientation of the attachment surface 29 of the flange section 28 for the end effector 35. In a case where they are not aligned, the orientation of the center axis may be monitored as the orientation of the distal end portion of the arm 31 or the orientation of the attachment surface 29 may be monitored. Incidentally, in a case where the end effector 35 is attached to the attachment surface 29, the end effector 35 is placed ahead of the attachment surface 29. In view of preventing contact between the worker and the end effector, it is preferable that the orientation of the attachment surface 29 be monitored as the orientation of the distal end portion of the arm 31.

(3) In the above-described embodiments, the logic section X2 causes the arm 31 to decelerate prior to the protective stop. However, a specific configuration for performing deceleration in advance may be changed as desired. For example, in addition to the above-described allowable angle $\alpha$, a deceleration start condition for starting deceleration may be settable by the user. It should be noted that an appropriate timing for starting deceleration depends on the movement speed of the distal end portion of the arm 31. In a case where these are taken into consideration, it is necessary to set respective deceleration start conditions in accordance with speeds. In this regard, in the above-described embodiment, the attitude of the distal end portion of the arm 31 resulting from immediately performing the protective stop is estimated in consideration of the current movement speed and it is determined whether deceleration is to be performed on the basis of the result of the estimation. This makes it possible to prevent an increase in the number of items required to be set by the user in order to cause pre-deceleration to function well. It means that the configuration according to the above-described embodiments is preferable for making disadvantages, such as complication of a setting work by the user, unlikely.

(4) The enabling/disabling of the attitude monitoring may be switched in accordance with at least one condition among the position, movement speed, movement direction, and the like of the distal end portion of the arm 31 of the robot 15. For example, the attitude monitoring may be disabled in a case where the distal end portion of the arm 31 is in a first area, whereas the attitude monitoring may be enabled in a case where the distal end portion of the arm 31 is in a second area. In addition, the attitude monitoring may be disabled in a case where the movement speed of the distal end portion of the arm 31 is lower than a threshold, whereas the attitude monitoring may be enabled in a case where the movement speed is higher than the threshold. In addition, the attitude monitoring may be enabled in a case where the distal end portion of the arm 31 is moving toward a predetermined area (for example, the work area WE), whereas the attitude monitoring may be disabled in a case where the distal end portion of the arm 31 is moving away from the predetermined area.

It should be noted that the work scene SCN4 (i.e., workpiece machining) described in the above-described embodiments includes a polishing scene where the robot 15 performs polishing with the polishing surface 36A pressed against the workpiece W1 and a movement scene where the distal end portion of the arm 31 moves in a location away from the workpiece W1. In the polishing scene, the distal end portion of the arm 31 moves in a location near the workpiece W1, whereas in the movement scene, the distal end portion of the arm 31 moves in a location distant from the workpiece W1. Accordingly, the attitude monitoring may be disabled in an area in the vicinity of the workpiece W1 (i.e., the predetermined area) where the polishing scene is assumable, whereas the attitude monitoring may be enabled outside the predetermined area.

(5) Even though the attitude deviation exceeds the allowable range, protective stop of the robot 15 may be avoided (i.e., an exclusion condition for the protective stop may be made) as long as the distal end portion of the arm 31 of the robot 15 (for example, the tool center point TCP or an origin FCP of the flange coordinate system) is in the predetermined area. For example, in a case where the distal end portion of the arm 31 is to move after work such as polishing, an area through which the distal end portion of the arm 31 of the robot 15 may pass during the work may be set as the above-described predetermined area. By virtue of avoiding the protective stop in a case where the distal end portion of the arm 31 of the robot 15 is in the predetermined area, it is possible to prevent a decrease in the work efficiency. For example, it is possible to prevent the attitude monitoring function from hampering the polishing action.

(6) In the above-described embodiments, the attitude monitoring of the distal end portion of the arm 31 is performed in a case where the polishing device 35A is attached as the end effector 35. However, the attitude monitoring of the distal end portion of the arm 31 may alternatively or additionally be performed in a case where a hand is attached as the end effector 35. For example, in a case where a tube or wiring for driving the hand is routed outside the arm 31, the wiring or the like is likely to be damaged depending on a change in direction of the attitude for changing the orientation of the hand. This would become a factor that causes a problem such as a malfunction or the like of the hand. In this regard, in a case where the hand is used, it is possible to prevent the occurrence of such a problem by performing the attitude monitoring of the distal end portion of the arm 31. In addition, in a case where, for example, a workpiece including a plurality of parts is grasped and carried with the hand, some of the unfixed parts would fall off the hand depending on the attitude of the distal end portion of the arm 31. In this regard, it is beneficial for preventing the above-described falling to perform the attitude monitoring of the distal end portion of the arm 31 in a case where the hand is attached as the end effector 35 as in the present modification example.

(7) The end effector 35 attached to the robot 15 may be changed in accordance with work in which the robot 15 is caused to engage as desired. For example, a cutting device, a laser device, or a sprayer may be attached as the end effector 35. For these end effectors 35, monitoring the attitude of the distal end portion of the arm 31 of the robot 15 is also contributable to an improvement in safety as for the polishing device. For example, for the cutting device, a control may be performed to prevent a cutter edge from facing toward the worker by the attitude monitoring of distal end portion of the arm 31. In addition, for the laser device or a sprayer, a control may be performed to prevent an outlet from facing toward the worker. A malfunction of the laser device, the sprayer, or the like under a situation where the distal end portion of the arm 31 faces toward the worker would result in a problem such as output of a laser beam or the like toward the worker.

(8) For the monitoring of the speed and the monitoring of the position of the distal end portion of the arm 31 in the above-described embodiments, a target to be monitored may be changed from the end effector 35 (for example, the tool center point TCP) to the flange section 28 (for example, the origin FCP of the flange coordinate system) as for the monitoring of the attitude of the distal end portion of the arm 31.

(9) In the above-described embodiments, the attitude of the distal end portion of the arm 31 of the robot 15 in the base coordinate system is calculated. However, the attitude of the distal end portion of the arm of the robot 15 in a world coordinate system may be calculated.

(10) In the above-described embodiments, in response to the attitude of the distal end portion of the arm 31 (i.e., the orientation of the distal end portion of the arm 31) becoming out of a range specified by the user, the logic section X2 performs the protective stop of the robot 15. However, instead of the protective stop, the logic section X2 may perform inversion of the motion of the robot 15 (i.e., the arm 31).

(11) In decelerating the robot 15 (i.e., the arm 31) prior to the protective stop, the logic section X2 may stop the action of the end effector 35.

(12) In the above-described embodiments, the attitude of the distal end portion of the arm 31 (i.e., the orientation of the distal end portion of the arm 31) is monitored during the automatic running of the robot 15. However, the attitude of the distal end portion of the arm 31 (i.e., the orientation of the distal end portion of the arm 31) may alternatively or additionally be monitored during teaching the robot 15.

(13) The configuration related to the attitude monitoring of the distal end portion of the arm 31 in the above-described embodiments may be applied to a horizontal articulated industrial robot. In addition, the configuration related to the above-described attitude monitoring may be applied to any industrial robot in addition to an industrial robot that engages in work in cooperation with a person. Further, the configuration related to the above-described attitude monitoring may be applied to any robot (for example, a robot for use in a restaurant or a hospital) in addition to an industrial robot for use in a factory.

<Features According to Embodiments of the Present Disclosure>

Features according to the above-described embodiments will be described below with effects or the like being presented, if necessary. It should be noted that a corresponding specific component in the above-described embodiments is written in a parenthesis or the like for the convenience of understanding. However, a component according to an embodiment of the present disclosure is by no means limited to the specific component written in the parenthesis or the like.

(Feature 1)

A robot control system (the control system CS) applied to an industrial robot (the robot 15), the industrial robot including an arm (the arm 31) including a plurality of joints (the first joint to the sixth joint) and a plurality of drivers (the servomotors 45) that drive the plurality of respective joints, the robot control system including:

> a determination section (in the monitoring section 56, the function to determine an actual attitude) that determines an orientation of a distal end portion (the flange section 28 or the end effector 35) of the arm of the industrial robot;
> a setting section (in the high-order controller 51, the setting function) that sets an allowable range for the orientation of the distal end portion of the arm of the industrial robot; and
> a monitoring section (the monitoring section 56 of the robot controller 52) that monitors whether the orientation of the distal end portion of the arm determined by the determination section is within the allowable range.

An industrial robot equipped with an arm including a plurality of joints each independently acting has high flexibility of motion. Thus, it is possible to cause the industrial robot to engage in a variety of types of work. Meanwhile, even though the distal end portion of the arm of the industrial robot is at the same position in different situations, the orientation of the distal end portion of the arm is not always the same in the different situations due to the high flexibility of motion. For example, even in a case where the distal end portion of the arm is to be moved to a specific position, different processes of movement may lead to different orientations of the distal end portion of the arm having reached the specific position. For example, in a case where a work area for persons is provided around the industrial robot, a worker is likely to touch the distal end portion of the arm if the distal end portion of the arm faces toward the work area. In addition, for example, a malfunction of an end effector, such as a laser device or a sprayer, included in the distal end portion of the arm under a situation where the distal end portion of the arm faces toward the work area would result in a problem such as output of a laser beam or the like toward the work area. Some controls systems for industrial robots have a function to monitor a position of the distal end portion of the arm and/or monitor a movement speed of the distal end portion of the arm. However, it may be difficult to prevent the occurrence of the above-described problem by the position monitoring and the speed monitoring. In this regard, in the configuration according to the present feature, the allowable range for the orientation of the distal end portion of the arm is set and it is monitored whether the orientation of the distal end portion of the arm is within the allowable range. This makes it possible to prevent the distal end portion of the arm from facing an unfavorable direction (for example, the above-described direction toward the work area, in particular, a worker, or the like) to reduce the occurrence of the above-described problem. This is preferable for further improving the safety of the industrial robot.

It should be noted that the orientation of the distal end portion of the arm of the industrial robot in the present feature may be an orientation of an attachment section (a flange section) provided at a distal end of the arm and having an end effector attached or may be an orientation of the end effector attached at the distal end of the arm. In addition, the orientation in the present feature and orientations in the following group of features may be an orientation in a base coordinate system or a world coordinate system.

(Feature 2)

A robot control system (the control system CS) applied to an industrial robot (the robot 15), the industrial robot including an arm (the arm 31) including a plurality of joints (the first joint to the sixth joint) and a plurality of drivers (the servomotors 45) that drive the plurality of respective joints, the distal end portion of the arm including an attachment section (the flange section 28) having an end effector (the end effector 35) attached, the robot control system including:

a determination section (in the monitoring section 56, the function to determine an actual attitude) that determines an orientation of the attachment section;

a setting section (in the high-order controller 51, the setting function) that sets an allowable range for the orientation of the attachment section; and

a monitoring section (the monitoring section 56 of the robot controller 52) that monitors whether the orientation of the attachment section determined by the determination section is within the allowable range.

An industrial robot is usually attachable with an end effector in a replaceable manner in order to engage in a variety of types of work. However, acquiring information regarding the orientation of the distal end of the arm on the basis of the end effector makes a configuration related to monitoring complicated and would become a factor that hampers the monitoring function. In this regard, the orientation of not the end effector but the attachment section for the end effector is monitored, which makes it possible to favorably eliminate a safety concern.

(Feature 3)

A robot control system (the control system CS) applied to an industrial robot (the robot 15), the industrial robot including an arm (the arm 31) including a plurality of joints (the first joint to the sixth joint) and a plurality of drivers (the servomotors 45) that drive the plurality of respective joints, the distal end portion of the arm including an attachment section (the flange section 28) having an end effector (the end effector 35) attached, the robot control system including:

a first setting section (in the high-order controller 51, the function to set the reference attitude RX to the reference attitude RZ) that sets an orientation of reference for the attachment section;

a first determination section (in the monitoring section 56, the function to identify an actual attitude) that determines an orientation of the attachment section;

a second setting section (in the high-order controller 51, the setting function for the allowable angle $\alpha$ or the like) that sets an upper limit of a deviation between the orientation of reference set by the first setting section and the orientation of the attachment section determined by the first determination section; and

a control section (the monitoring section 56) that performs predetermined control processing (the protective stop processing or the abnormality alert processing) in response to the deviation exceeding the upper limit.

The orientation of reference for the distal end portion of the arm differs depending on the work or motion of the industrial robot. Accordingly, the orientation of reference and the upper limit of the deviation of orientation are set as in the present feature, which makes it possible to appropriately monitor the orientation of the distal end portion of the arm in accordance with the work or motion of the industrial robot.

It should be noted that the predetermined control processing in the present feature may include, for example, deceleration processing to decelerate the arm, stop processing to stop the arm, inversion processing to invert a motion of the arm, or alert processing to issue an alert regarding the orientation of the distal end portion of the arm.

(Feature 4)

The robot control system according to Feature 3, wherein

the attachment section has an attachment surface (the attachment surface 29) for the end effector,

the first setting section sets an orientation of the attachment surface as the orientation of reference, and

the first determination section determines the orientation of the attachment surface as the orientation of the attachment section.

The end effector attached to the attachment surface is located ahead in a direction for the attachment surface to face. Thus, the orientation of the attachment surface for the end effector is subjected to the above-described monitoring. This monitoring makes it possible to favorably exhibit the effect of preventing contact with the end effector, or the like.

(Feature 5)

A robot control system (the control system CS) applied to an industrial robot (the robot 15), the industrial robot including an arm (the arm 31) including a plurality of joints (the first joint to the sixth joint) and a plurality of drivers (the servomotors 45) that drive the plurality of respective joints, the distal end of the arm having an end effector (the end effector 35) attached, the robot control system including:

a determination section that determines an orientation of the end effector;

a setting section that sets an allowable range for the orientation of the end effector; and

a monitoring section (the monitoring section 56 of the robot controller 52) that monitors whether the orientation of the end effector determined by the determination section is within the allowable range.

The configuration according to the above-described Feature 2 or the like is preferable for reducing the possibility of the user accidentally touching the end effector. Here, in a case where the end effector has a specific component such as a working section such as a cutter or an outlet for a laser beam or the like, it is desirable that the specific component of the end effector do not face the work area or the like. In this regard, monitoring the orientation of the end effector as the distal end portion of the arm of the industrial robot as in the present feature is effective in reducing the possibility of the worker touching the specific component of the above-described end effector.

It should be noted that the orientation of the end effector in the present feature may be an orientation of the specific component of the above-described end effector.

(Feature 6)

A robot control system (the control system CS) applied to an industrial robot (the robot 15), the industrial robot including an arm (the arm 31) including a plurality of joints (the first joint to the sixth joint) and a plurality of drivers (the servomotors 45) that drive the plurality of respective joints, the distal end of the arm having an end effector (the end effector 35) attached, the robot control system including:

a first setting section (in the high-order controller 51, the setting function for a reference attitude) that sets an orientation of reference for the end effector;

a first determination section (in the monitoring section 56, the function to identify an actual attitude) that determines an orientation of the end effector;

a second setting section (in the high-order controller 51, the setting function for the allowable angle $\alpha$ or the like) that sets an upper limit of a deviation between the orientation of reference set by the first setting section and the orientation determined by the first determination section; and

a control section (the monitoring section 56) that performs predetermined control processing (the protective stop processing or the abnormality alert processing) in response to the deviation exceeding the upper limit.

The orientation of reference for the distal end portion of the arm differs depending on the work or motion of the industrial robot. Accordingly, the orientation of reference and the upper limit of the deviation of orientation are set as in the present feature, which makes it possible to appropriately monitor the orientation of the distal end portion of the arm in accordance with the work or motion of the industrial robot.

It should be noted that the predetermined control processing in the present feature may include, for example, deceleration processing to decelerate the arm, stop processing to stop the arm, inversion processing to invert a motion of the arm, or alert processing to issue an alert regarding the orientation of the distal end portion of the arm.

(Feature 7)

The robot control system according to Feature 3 or Feature 6, wherein

the predetermined control processing includes stop processing to stop the arm, and

the robot control system further includes an execution section (in the logic section X2, the function to perform the pre-deceleration processing) that performs, under a situation where the stop processing may be performed, deceleration processing (the pre-deceleration processing) for decelerating the arm before the stop processing is performed.

Even though the stop processing for the arm is performed, there would be a slight time lag before the arm is fully stopped. Thus, there is a possibility that even though the stop processing is performed, the orientation of the distal end portion of the arm in a stopped state is likely to be unsuitable. This is not preferable for achieving an improvement in the safety of the industrial robot, or the like. In this regard, the arm is decelerated in advance under the situation where the stop processing may be performed as in the present feature, which makes it possible to shorten the time lag to prevent the distal end portion of the arm from being stopped in an unsuitable orientation.

It should be noted that the situation where the stop processing may be performed in the present feature may be, for example, a case where a difference between the deviation and the upper limit reaches a threshold smaller than the upper limit.

(Feature 8)

The robot control system according to Feature 3 or Feature 6, wherein

the predetermined control processing includes stop processing to stop the arm,
the robot control system further includes an execution section (in the logic section X2, the function to perform the pre-deceleration processing) that performs deceleration processing (the pre-deceleration processing) for decelerating the arm before the stop processing is performed, and
the execution section determines whether the deceleration processing is to be performed on the basis of the deviation, the upper limit, and the movement speed.

The above-described time lag depends on the movement speed of the distal end portion of the arm. Accordingly, the movement speed is taken into consideration to determine whether pre-deceleration is to be started as in the present feature. This makes it possible to prevent deceleration from becoming insufficient and make a problem, such as a decrease in the work efficiency of the robot due to frequent unnecessary deceleration, unlikely to occur.

(Feature 9)

The robot control system according to Feature 3 or Feature 6, wherein

the predetermined control processing includes stop processing to stop the arm, and
the robot control system further includes:

a second determination section (in the logic section X2, the function to calculate a speed) that determines a movement speed of the distal end portion of the arm of the industrial robot;
an estimation section (the estimation function of the logic section X2) that estimates, on the basis of the movement speed determined by the second determination section, whether the deviation exceeds the upper limit, assuming that the industrial robot keeps on acting; and
an execution section (in the logic section X2, the function to perform the pre-deceleration processing) that performs, in a case where the estimation section estimates that the deviation exceeds the upper limit, deceleration processing (the pre-deceleration processing) for decelerating the arm.

The deceleration is started in a case where the deviation is estimated to exceed the upper limit as in the present feature, which makes it possible to favorably prevent the deceleration function from becoming a factor that decreases the work efficiency of the industrial robot.

(Feature 10)

The robot control system according to any one of Feature 3, 4, and 6 to 9, wherein

the predetermined control processing includes stop processing to stop the arm, and
even though the deviation exceeds the upper limit, the control section does not stop the arm through the stop processing under a situation where the distal end portion of the arm of the industrial robot is in a predetermined area.

The protective stop of the arm would become a factor that decreases the work efficiency or the quality of work depending on the position of the distal end portion of the arm of the robot. For example, for polishing of the workpiece, the necessity for monitoring the orientation of the distal end portion of the arm is low in the vicinity of a workpiece. Thus, the necessity for stopping the arm is low in the vicinity of the workpiece even though the deviation exceeds the upper limit. Accordingly, in a case where the distal end portion of the arm is in a preset area (i.e., the predetermined area), the control section does not stop the arm even though the deviation exceeds the upper limit as in the present feature. This makes it possible to prevent a decrease in the work efficiency or a decrease in the quality of the workpiece due to halfway polishing.
It should be noted that Feature 10 may be replaced with the following feature.
The robot control system according to any one of Feature 3, 4, and 6 to 9, further including an acquirement section that acquires position information correlated with a position of the distal end portion of the arm of the industrial robot, wherein
the control section disables the predetermined control processing in a case where the position of the distal end portion of the arm is determined to be in the predetermined area on the basis of the position information.

(Feature 11)

The robot control system according to any one of Feature 3, 4, and 6 to 10, wherein

action modes of the industrial robot includes a first action mode and a second action mode different from the first action mode,
the first setting section sets the orientation of reference for each of the first action mode and the second action mode, and
the second setting section sets the upper limit for each of the first action mode and the second action mode.

There is a possibility that the orientation of reference and the upper limit differ depending on the action mode of the industrial robot. Hence, it is not preferable that the orientation of reference and the upper limit be common to a plurality of different action modes (i.e., the first action mode and the second action mode) in terms of causing the monitoring function to be appropriately exhibited. Accordingly, it is technically significant to set the orientation of reference and the upper limit corresponding the action mode as in the present feature.

(Feature 12)

The robot control system according to any one of Feature 3, 4, and 6 to 10, wherein

a first end effector and a second end effector are attached to a distal end of the arm, and
the first setting section and the second setting section set the orientation of reference and the upper limit for each of the first end effector and the second end effector.

There is a possibility that the orientation of reference and the upper limit differ depending on the type of the end effector in use. Hence, it is not preferable that the orientation of reference and the upper limit be common to a plurality of different end effectors (i.e., the first end effector and the second end effector) in terms of causing the monitoring function to be appropriately exhibited. Accordingly, it is technically meaningful to set the orientation of reference and the upper limit for each of the end effectors as in the present feature.

(Feature 13)

The robot control system according to any one of Feature 1 to Feature 12, in which

at least one end effector are attached to a distal end of the arm, and
the at least one end effector is at least one of a cutting tool, a polishing tool, a heat source, a laser generator, or a sprayer.

For an industrial robot to which a cutting tool, a polishing tool, a heat source, a laser generator, or a sprayer is attached, the orientation of the distal end portion of the arm is an important element in terms of an improvement in safety. Accordingly, the monitoring function according to the above-described feature is applied to the industrial robot having these end effectors attached, which is favorably contributable to an improvement in the safety of the industrial robot. It should be noted that a cutter edge of the cutting tool, an outlet of the laser generator, or the like facing toward a worker working near the industrial robot would become a factor that gives an uncomfortable feeling to the worker. It is preferable that the orientation of the distal end portion of the arm of the robot having the cutting tool or the like attached be monitored in terms of providing a comfortable work environment to the worker to promote cooperation between the industrial robot and the person.

(Feature 14)

A robot control system (the control system CS) applied to an industrial robot (the robot 15), the industrial robot including an arm (the arm 31) including a plurality of joints (the first joint to the sixth joint) and a plurality of drivers (the servomotors 45) that drive the plurality of respective joints, the robot control system including:

a determination section (in the monitoring section 56, the function to identify an actual attitude) that determines an attitude of a distal end portion (the flange section 28 or the end effector 35) of the arm of the industrial robot;
a setting section (in the high-order controller 51, the setting function) that sets an allowable range for the attitude of the distal end portion of the arm of the industrial robot; and

a monitoring section (the monitoring section 56 of the robot controller 52) that monitors whether or not the attitude of the distal end portion of the arm determined by the determination section is within the allowable range.

The configuration according to the present feature is contributable to a further improvement in the safety of the industrial robot.

It should be noted that the attitude of the distal end portion of the arm of the industrial robot in the present feature may be an attitude of an attachment section (a flange section) provided at a distal end of the arm and having an end effector attached or may be an attitude of the end effector attached at the distal end of the arm. In addition, the attitude in the present feature and attitudes in the following group of features may be an attitude in a base coordinate system or a world coordinate system.

(Feature 15)

A robot control system (the control system CS) applied to an industrial robot (the robot 15), the industrial robot including an arm (the arm 31) including a plurality of joints (the first joint to the sixth joint) and a plurality of drivers (the servomotors 45) that drive the plurality of respective joints, the robot control system including:

a first setting section (in the high-order controller 51, the function to set the reference attitude RX to the reference attitude RZ) that sets an attitude of reference for the attachment section (the flange section 28) at a distal end of the arm and having an end effector (the end effector 35) attached;
a determination section (in the monitoring section 56, the function to identify an actual attitude) that determines an attitude of the attachment section;
a second setting section (in the high-order controller 51, the setting function for the allowable angle $\alpha$ or the like) that sets an upper limit of a deviation between the attitude of reference set by the first setting section and the attitude determined by the determination section; and
a control section (the monitoring section 56) that performs predetermined control processing (the protective stop processing or the abnormality alert processing) in response to the deviation exceeding the upper limit.

By virtue of setting the attitude of reference and the upper limit of the deviation for the attitude as in the present feature, it is possible to appropriately monitor the attitude of the distal end portion of the arm in accordance with work or the like.

It should be noted that the predetermined control processing in the present feature may include, for example, deceleration processing to decelerate the arm, stop processing to stop the arm, inversion processing to invert a motion of the arm, or alert processing to issue an alert regarding the attitude of the distal end portion of the arm.

**Claims**

1.  A robot system including an industrial robot (15), the industrial robot including an arm (31) including a plurality of joints and a plurality of drivers (45) that drive the plurality of respective joints, the robot system comprising a monitoring section (56), the monitoring section:

    determining an orientation of a distal end portion (28, 35) of the arm of the industrial robot; and
    monitoring whether the determined orientation of the distal end portion of the arm is within a set allowable range.

2.  The robot system according to claim 1, wherein

    the distal end portion of the arm includes an attachment section (28) to which an end effector (35) is attached, an orientation of reference for the attachment section is set, and an upper limit of a deviation between the orientation of reference for the attachment section and an orientation of the attachment section is set, and
    the monitoring section determines the orientation of the attachment section and performs predetermined control processing in response to the deviation exceeding the upper limit.

3.  The robot system according to claim 1, wherein

    the distal end portion of the arm includes an end effector (35), the end effector being attached to a distal end of the arm,
    an orientation of reference for the end effector is set, and an upper limit of a deviation between the orientation of reference for the end effector and an orientation of the end effector is set, and
the monitoring section determines the orientation of the end effector and performs predetermined control processing in response to the deviation exceeding the upper limit.

4. The robot system according to claim 2 or claim 3, wherein

the predetermined control processing includes processing to stop the arm, and
the robot system:

acquires a movement speed of the distal end portion of the arm of the industrial robot;
estimates, on a basis of the acquired movement speed, whether the deviation exceeds the upper limit, assuming that the industrial robot keeps on acting; and
performs deceleration processing for the arm in a case where the deviation is estimated to exceed the upper limit.

# FIG.1

# FIG.2

10

ROBOT ~15

ROBOT CONTROLLER ~52

HIGH-ORDER CONTROLLER ~51

DRIVE CONTROL SECTION ~55

MONITORING SECTION ~56

ROBOT BODY ~21

SERVOMOTOR ~45

ROTARY ENCODER ~46

TORQUE SENSOR ~47

END EFFECTOR ~35

CAMERA ~38

# FIG.3A

MOTION TRACK

# FIG.3B

WORK ROUTINE OF ROBOT

| WORK SCENE | | WORK CONTENTS |
|---|---|---|
| SCN1 | PICK-UP | PICK UP WORKPIECE FROM CONTAINER |
| SCN2 | WORKPIECE SETTING | SET WORKPIECE IN JIG |
| SCN3 | TOOL REPLACEMENT | REPLACE END EFFECTOR FROM HAND TO POLISHING DEVICE |
| SCN4 | WORKPIECE MACHINING | POLISH WORKPIECE |
| SCN5 | TOOL REPLACEMENT | REPLACE END EFFECTOR FROM POLISHING DEVICE TO HAND |
| SCN6 | WORKPIECE TRANSFER | TRANSFER WORKPIECE |

# FIG.4A

# FIG.4B

24

# FIG.5

CONTROL SYSTEM

CS

PX

SAFETY-RELATED SECTION

DRIVE CONTROL SECTION (PAC SCRIPT) — 55

ROTARY ENCODER — 46

INPUT SECTION — X1

LOGIC SECTION — X2

OUTPUT SECTION — X3

DRIVE CIRCUIT FOR MOTOR

# FIG.6A

| WORK SCENE | MONITORING OF SPEED | MONITORING OF FORCE | MONITORING OF POSITION | MONITORING OF ATTITUDE |
|---|---|---|---|---|
| SCN1 | ○ | ○ | ○ | X |
| SCN2 | ○ | ○ | ○ | X |
| SCN3 | ○ | ○ | ○ | ○ |
| SCN4 | ○ | ○ | ○ | ○ |
| SCN5 | ○ | ○ | ○ | ○ |
| SCN6 | ○ | ○ | ○ | X |

# FIG.6B

PARAMETER SETTING                                                    X

MAIN SCENE 1        MAIN ITEM | ALL ITEMS                    D2
MAIN SCENE 2
MAIN SCENE 3        | ITEM | VALUE |
MAIN SCENE 4        | COOPERATIVE ACTION SETTING | 0:COOPERATIVE |
MAIN SCENE 5        | TOOL NUMBER | 0 |
MAIN SCENE 6        | WORKPIECE NUMBER | 0 |
MAIN SCENE 7        | OBJECT NUMBER | 0 |
MAIN SCENE 8        | ATTITUDE MONITORING ENABLEMENT SETTING (ENABLED/DISABLED) | 0:DISABLED |
MAIN SCENE 9        | REFERENCE ATTITUDE RX (deg) | 0 |
SPECIAL SCENE 1     | REFERENCE ATTITUDE RY (deg) | 0 |
SPECIAL SCENE 2     | REFERENCE ATTITUDE RZ (deg) | 0 |
                    | ALLOWABLE ANGLE α (deg) | 0 |
                    | SPEED MONITORING ENABLEMENT SETTING (ENABLED/DISABLED) | 1:ENABLED |
                    | REFERENCE SPEED (mm/s) | 150 |
                    | FORCE MONITORING ENABLEMENT SETTING (ENABLED/DISABLED) | 1:ENABLED |
                    | REFERENCE FORCE (N) | 40 |

D1          51a          WD

CANCEL          OK

# FIG.6C

| WORK SCENE | SETTING ITEMS FOR MONITORING OF ATTITUDE | | | |
|---|---|---|---|---|
| | REFERENCE ATTITUDE RX (deg) | REFERENCE ATTITUDE RY (deg) | REFERENCE ATTITUDE RZ (deg) | ALLOWABLE ANGLE α (deg) |
| SCN4 | 180 | 0 | 180 | 60 |

# FIG.7A

15

10

21

28

FCP

X FLANGE
COORDINATE
SYSTEM

y

35A

36A

z

ORIENTATION OF
FLANGE SECTION AND
POLISHING DEVICE

Z

22

X

Y

BASE COORDINATE SYSTEM

# FIG.7B

AX6

28

29

FCP

CL

36A

35A

TCP

ORIENTATION OF FLANGE SECTION

ORIENTATION OF POLISHING DEVICE

27

# FIG.8

```
ATTITUDE MONITORING
PROCESSING
(LOGIC SECTION X2)
        │
        │  ┌─ S101
        ▼
┌─────────────────────────┐
│ IDENTIFY CURRENT        │
│ ATTITUDE (ACTUAL ATTITUDE)│
└─────────────────────────┘
        │
        │  ┌─ S102
        ▼
┌─────────────────────────┐
│ DETERMINE WHETHER       │
│ DEVIATION BETWEEN       │
│ ACTUAL ATTITUDE AND     │
│ REFERENCE ATTITUDE IS   │
│ WITHIN ALLOWABLE RANGE  │
└─────────────────────────┘
        │
        │  ┌─ S103
        ▼
   ╱─────────────╲        NO
  ⟨ DEVIATION IS WITHIN ⟩ ──────────────────┐
   ╲ ALLOWABLE RANGE ? ╱                     │
        │ YES                                │
        │  ┌─ S105                           │  ┌─ S104
        ▼                                    ▼
┌─────────────────────────┐    ┌─────────────────────────┐
│ IDENTIFY CURRENT SPEED  │    │ PROTECTIVE STOP AND     │
└─────────────────────────┘    │ ABNORMALITY ALERT       │
        │                      │ PROCESSING              │
        │  ┌─ S106             └─────────────────────────┘
        ▼                                    │
┌─────────────────────────┐                  │
│ ESTIMATE ATTITUDE WITH  │                  │
│ ASSUMPTION THAT ROBOT   │                  │
│ IS STOPPED              │                  │
└─────────────────────────┘                  │
        │                                    │
        │  ┌─ S107                           │
        ▼                                    │
┌─────────────────────────┐                  │
│ DETERMINE WHETHER       │                  │
│ DEVIATION BETWEEN       │                  │
│ ESTIMATED ATTITUDE AND  │                  │
│ REFERENCE ATTITUDE IS   │                  │
│ WITHIN ALLOWABLE RANGE  │                  │
└─────────────────────────┘                  │
        │                                    │
        │  ┌─ S108                           │
        ▼                                    │
   ╱─────────────╲        NO                 │
  ⟨ DEVIATION IS WITHIN ⟩ ──────────┐        │
   ╲ ALLOWABLE RANGE ? ╱            │        │
        │ YES                       │        │
        │  ┌─ S110                  │        │
        ▼                           │        │
   ╱─────────────╲     YES          │        │
  ⟨ UNDER PRE-    ⟩ ────────┐       │        │
   ╲ DECELERATION ?╱        │       │        │
        │ NO                │       │        │
        │          ┌─ S111  ▼       ▼ S109   │
        │      ┌──────────────┐ ┌──────────────┐
        │      │ DECELERATION │ │PRE-DECELERATION│
        │      │ CANCEL       │ │ PROCESSING   │
        │      │ PROCESSING   │ └──────────────┘
        │      └──────────────┘        │
        ▼           │                  │
   ┌────────┐◄──────┴──────────────────┘
   │  END   │
   └────────┘
```

# FIG.9A

# FIG.9B

# FIG.10A

| WORK SCENE | SETTING ITEMS FOR MONITORING OF ATTITUDE | | | | | |
|---|---|---|---|---|---|---|
| | REFERENCE ATTITUDE RX (deg) | REFERENCE ATTITUDE RY (deg) | REFERENCE ATTITUDE RZ (deg) | ALLOWABLE ANGLE LX (deg) | ALLOWABLE ANGLE LY (deg) | ALLOWABLE ANGLE LZ (deg) |
| SCN4 | 180 | 0 | 180 | 30 | 20 | 60 |

# FIG.10B

| REFERENCE ATTITUDE RX – ACTUAL ATTITUDE RX' | > ALLOWABLE ANGLE LX

and, or

| REFERENCE ATTITUDE RY – ACTUAL ATTITUDE RY' | > ALLOWABLE ANGLE LY   ⟹   PROTECTIVE STOP AND ABNORMALITY ALERT PROCESSING (S104)

and, or

| REFERENCE ATTITUDE RZ – ACTUAL ATTITUDE RZ' | > ALLOWABLE ANGLE LZ

EP 4 438 243 A1

# FIG.11

ROBOT CONTROL SYSTEM

PROCESSOR 201

MEMORY 202

Europäisches
Patentamt

European
Patent Office

Office européen
des brevets

# EUROPEAN SEARCH REPORT

Application Number

EP 24 16 3760

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 7 173798 B2 (FANUC LTD) 16 November 2022 (2022-11-16) * paragraph [0015] * * paragraph [0076] * * paragraph [0078] * | 1 | INV. B25J9/16 |
| X | US 2017/057095 A1 (OESTERGAARD ESBEN H [DK] ET AL) 2 March 2017 (2017-03-02) * paragraph [0044] - paragraph [0045] * * paragraph [0054] * * paragraph [0064] * | 1-4 | |
| A | US 2018/304467 A1 (MATSUURA KENJI [JP] ET AL) 25 October 2018 (2018-10-25) * paragraph [0522] * | 4 | |

TECHNICAL FIELDS
SEARCHED      (IPC)

B25J

The present search report has been drawn up for all claims

| Place of search | Date of completion of the search | Examiner |
|---|---|---|
| The Hague | 19 July 2024 | Lefeure, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 3760

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2024

| Patent document cited in search report | | Publication date | Patent family member(s) | | Publication date |
|---|---|---|---|---|---|
| JP 7173798 | B2 | 16-11-2022 | JP 7173798 | B2 | 16-11-2022 |
| | | | JP 2020037165 | A | 12-03-2020 |
| US 2017057095 | A1 | 02-03-2017 | CA 2940490 | A1 | 11-09-2015 |
| | | | CN 106061688 | A | 26-10-2016 |
| | | | EP 3113914 | A1 | 11-01-2017 |
| | | | JP 7042554 | B2 | 28-03-2022 |
| | | | JP 2017507041 | A | 16-03-2017 |
| | | | JP 2020114623 | A | 30-07-2020 |
| | | | KR 20160130424 | A | 11-11-2016 |
| | | | MX 363591 | B | 28-03-2019 |
| | | | RU 2016137881 | A | 05-04-2018 |
| | | | SG 11201607059U | A | 29-09-2016 |
| | | | US 2017057095 | A1 | 02-03-2017 |
| | | | WO 2015131904 | A1 | 11-09-2015 |
| US 2018304467 | A1 | 25-10-2018 | CN 108724179 | A | 02-11-2018 |
| | | | JP 6880982 | B2 | 02-06-2021 |
| | | | JP 2018176404 | A | 15-11-2018 |
| | | | US 2018304467 | A1 | 25-10-2018 |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S6416395 A

- JP H0337701 A